Europäisches Patentamt

European Patent Office

Office européen des brevets

(19)

(11) Numéro de publication: **0 128 063**
**B1**

(12) # FASCICULE DE BREVET EUROPEEN

(45) Date de publication du fascicule du brevet:
20.12.89

(51) Int. Cl.⁴: **H 04 N 9/74**

(21) Numéro de dépôt: **84400904.3**

(22) Date de dépôt: **03.05.84**

(54) **Procédé et dispositif de réglage d'un fond coloré dans une image de télévision.**

(30) Priorité: **10.05.83 FR 8307797**

(43) Date de publication de la demande:
**12.12.84 Bulletin 84/50**

(45) Mention de la délivrance du brevet:
**20.12.89 Bulletin 89/51**

(84) Etats contractants désignés:
**BE DE GB NL**

(56) Documents cités:
**DE-A- 2 544 596**

**ELECTRO-OPTICAL SYSTEMS DESIGN, vol. 12, no. 3, mars 1980, pages 29-36, Chicago, US; M.D. BUCHANAN et al.: "Digital image processing: Can intensity, hue, and saturation replace red, green, and blue?"**
**L'ONDE ELECTRIQUE, vol. 53, fasc. 9, octobre 1973, pages 360-363, Paris, FR; L. MIGNOT et al.: "Le SISDEC (Système d'incrustation par sélection dans l'espace des couleurs)"**

(73) Titulaire: **THOMSON-CSF, 51, Esplanade du Général de Gaulle, F-92800 Puteaux (FR)**

(72) Inventeur: **Bedos, Thierry, THOMSON-CSF SCPI 173, bid Haussmann, F-75379 Paris Cedex 08 (FR)**
Inventeur: **Clerissi, Roland, THOMSON-CSF SCPI 173, bid Haussmann, F-75379 Paris Cedex 08 (FR)**
Inventeur: **Nguyen Xuan, Kiet, THOMSON-CSF SCPI 173, bid Haussmann, F-75379 Paris Cedex 08 (FR)**
Inventeur: **Vallee, Jacques, THOMSON-CSF SCPI 173, bid Haussmann, F-75379 Paris Cedex 08 (FR)**

(74) Mandataire: **Courtellemont, Alain et al, THOMSON-CSF SCPI, F-92045 PARIS LA DEFENSE CEDEX 67 (FR)**

ACTORUM AG

## Description

La présente invention se rapporte au réglage d'un fond coloré dans une image de télévision.

Pour effectuer le réglage d'un fond coloré (rectangle, cadre, tache, etc...) il suffit de commander trois variables: par exemple le rouge (R), le vert (V) et le bleu (B). Mais les trois variables (R, V, B) de cet exemple correspondent à des notions difficilement perceptibles par l'œil humain. C'est pourquoi, dans certains dispositifs connus, il est procédé à un réglage de luminance par potentiomètre et à un double réglage au moyen d'un «manche à balai» qui, en commandant deux potentiomètres, génère un carré de tension; ce carré est assimilé au triangle des couleurs et à toute position du manche à balai est associé un point du triangle. Mais dans ces réalisations la sensibilité du réglage de la teinte varie, en fonction des zones, du fait de la nature de la transformation triangle-carré.

Par ailleurs dans les réalisations connues les possibilités de modulation de la teinte et de la saturation sont limitées car en particulier, il n'est pas possible d'agir sur la teinte sans modifier la saturation et vice versa.

La présente invention a pour but d'éviter les inconvénients précités.

Ceci est obtenu en prenant pour variables de réglage la luminance, la teinte et la saturation et en déterminant les coefficients de couleur à partir de ces trois variables, à l'aide d'une représentation, donnée par hypothèse, du lieu géométrique des coefficients pour une luminance déterminée, lorsque la teinte et la saturation varient.

Selon l'invention un procédé de réglage d'un fond coloré, est caractérisé en ce qu'il consiste à afficher, comme variables de réglage, la luminance, Y, la saturation, S, et la teinte, T, et à déterminer les coefficients des couleurs primaires en fonction de ces trois variables, en ce qu'il consiste à définir, à partir de l'excursion maximale, 6xdT, de la teinte, six intervalles égaux, de largeur dT, et trois régions égales, d'origines respectives T = 0, T = 2xdT et T = 4xdT, à définir la valeur de teinte affichée par l'intervalle dans lequel se trouve cette valeur affichée et par la différence, T', entre la valeur affichée et la valeur de l'origine de celle des régions dans laquelle elle se trouve située et à prendre comme coefficients respectifs des trois couleurs primaires rouge, vert, bleu
— dans le premier intervalle:

$$Y, Y - SxY + \frac{T'xSxY}{dT} = k1, \quad Y - SxY = k2$$

— dans le deuxième intervalle:

$$Y + SxY - \frac{T'xSxY}{dT} = k3, \quad Y, \quad k2$$

— dans le troisième intervalle: k2, Y, k1
— dans le quatrième intervalle: k2, k3, Y
— dans le cinquième intervalle: k1, k2, Y
— dans le sixième intervalle: Y, k2, k3.

Il est par ailleurs à noter que le document Electro-Optical Systems Design, vol. 12, n° 3, mars 1980, pages 29–36, non pas pour régler un fond coloré mais pour obtenir une image composite à partir de plusieurs images, propose de générer les signaux de luminance, saturation et teinte puis de les transformer en signaux rouge, vert et bleu d'une façon qui n'est pas précisée.

La présente invention sera mieux comprise et d'autres caractéristiques apparaîtront à l'aide de la description ci-après et des figures s'y rapportant, qui représentent:
— la figure 1 un triangle des couleurs classique,
— la figure 2 un carré à comparer avec le triangle de la figure 1,
— les figures 3 à 5 des figures géométriques relatives à l'invention,
— la figure 6 un schéma électrique d'un dispositif de réglage selon l'invention,
— les figures 7 et 8 des schémas destinés à expliquer le fonctionnement d'un des circuits de la figure 6.

Sur les différentes figures les éléments correspondants sont désignés par les mêmes repères.

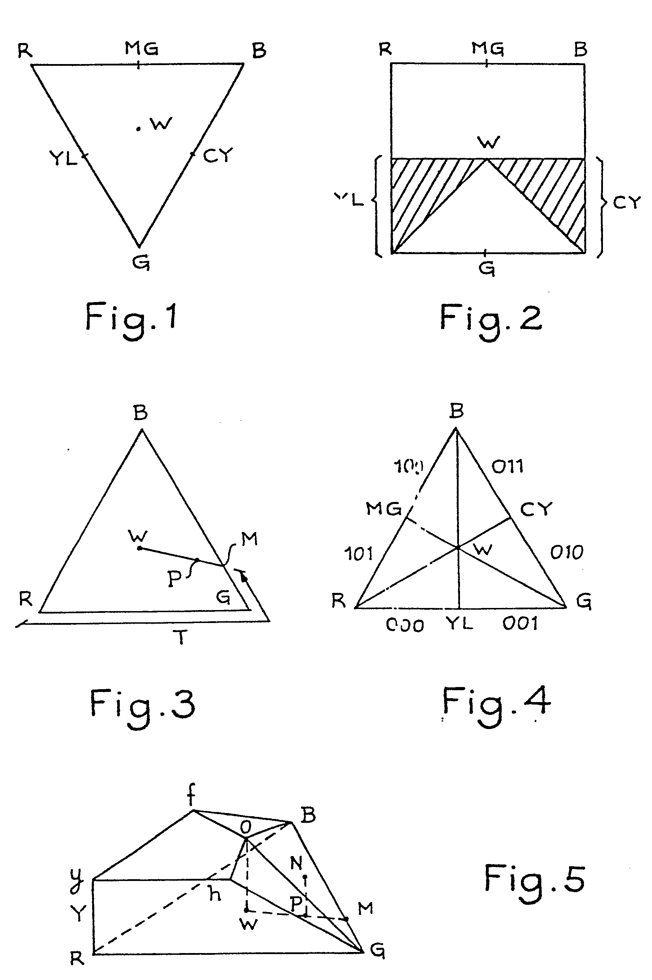

La figure 1 représente le triangle des couleurs classique avec les points blanc, W, rouge, R, bleu, B, vert, G, magenta, MG, cyan, CY, et jaune, YL.

Pour régler un fond coloré il est connu (mélangeur TTV 5600 de THOMSON-CSF) de choisir la luminance et de déterminer un point dans le triangle des couleurs au moyen d'un «manche à balai» qui commande deux potentiomètres dont les déplacements des curseurs s'effectuent suivant deux directions perpendiculaires. Comme les valeurs des tensions fournies par les deux potentiomètres peuvent être associées à l'ensemble des points d'un carré (figure 2) et non pas à l'ensemble des points d'un triangle, afin d'assimiler le carré au triangle des couleurs il est prévu, dans le mélangeur sus-indiqué, de considérer les points des surfaces hachurées du carré de la figure 2 comme des points jaunes (surface hachurée de gauche) ou des points cyan (surface hachurée de droite); dans ces surfaces hachurées la teinte est constante. Avec un réglage de fond coloré effectué sur ce principe il est très difficile, en modulant les tensions fournies par les potentiomètres de réglage, de moduler la teinte et elle seule ou la saturation et elle seule.

La figure 3 montre un triangle R.G.B qui diffère du triangle des couleurs classiques (figure 1) de par les résultats qu'il donne pour les coefficients des couleurs primaires en fonction d'un point P situé dans le triangle et correspondant à une valeur de teinte et de saturation données. La détermination des coefficients des couleurs, à partir d'un point du triangle, fait intervenir la luminance Y d'une manière qui sera expliquée à l'aide de la figure 4.

Sur la figure 3 a été représenté un point M tel que la longueur R.G.M corresponde au réglage à un moment donné de la teinte T. A ce même moment la position du point P est déterminée par le réglage de la saturation $S = \dfrac{W.P}{W.M}$.

La figure 4 montre comment, connaissant la position du point P et la valeur Y de la saturation, est définie la valeur N.P du coefficient du rouge. Il est donné à ce coefficient une valeur égale à la valeur de la luminance Y, là où la couleur considérée domine; c'est-à-dire que, pour un point P situé dans la zone R.M.G.W.YL (voir figure 4), le coefficient du rouge est pris égal à Y. Pour P situé en dehors de la zone où le rouge domine ce coefficient est défini de manière à présenter une variation linéaire entre la limite MG.W.YL (voir figure 4) de la zone où il vaut Y et la limite B.G (voir figure 4) où il est nul, c'est-à-dire sur les autres couleurs primaires.

La figure 5 montre le triangle R.G.B de la figure 4, au-dessus duquel a été dessinée une figure géométrique 0.h.y.f.B.G.h qui est l'ensemble des points N dont la projection P sur le triangle R.G.B soit telle que N.P ait une longueur correspondant au coefficient du rouge tel que défini dans le paragraphe précédent.

Les coefficients des autres couleurs primaires (vert et bleu) sont obtenus en faisant tourner de 120° puis encore de 120° la figure géométrique construite au-dessus du triangle R.G.B, mais en laissant ce triangle fixe.

Dans la réalisation pratique qui va être décrite ci-après, la teinte T est repérée sur le triangle R.G.B comme indiqué sur la figure 3: origine = point R, sens de déplacement = sens inverse des aiguilles d'une montre. Le codage de la teinte est effectué en binaire au moyen de dix bits dont les trois bits de poids fort indiquent celui des six demi-côtés du triangle, tels que G.CY, sur lequel se trouve le point représentatif de la teinte; la valeur de ces trois bits de poids fort a été portée sur la figure 4 à côté des demi-côtés auxquels elle correspond: 000 pour le demi-côté R.YL, 001 pour le demi-côté YL.G, 010 pour le demi-côté G.CY, etc...

Les sept autres bits de la teinte correspondent à un repérage de la teinte par rapport à une graduation de 128 points régulièrement répartis sur chaque demi-côté; la teinte peut donc varier de la valeur 0000000000 à la valeur 1011111111.

La luminance Y et la saturation sont codées au moyen de huit bits dans l'exemple décrit.

Le calcul ci-après, effectué à partir des figures 4 et 5, donne le coefficient du rouge pour les différentes régions du triangle dans lesquelles peut se trouver le point P:

– région R.W.G (2 bits de poids fort de la teinte = 00)

  a) zone R.W.YL (surface Y0h de la figure 5) la valeur tronquée aux 8 bits de poids faible de la teinte T, est T' telle que $0 \leqslant T' < 128$ dans ce cas le coefficient du rouge est: $CLR(R) = Y$ (voir figure 5)

  b) zone YL.W.G associée à la surface G.h.0 (figure 5) dans cette zone $128 \leqslant T' < 256$ pour $S = 1$ (segment hG de la figure 5)

$$CLR(R) = Y\left(1 - \frac{T'-dT}{dT}\right) = 2xY - \frac{T'xY}{dT}$$

avec dT = constante = 128 = variation maximale de la teinte dans la zone pour $0 \leqslant S \leqslant 1$ (S = 0 au point 0 de la figure 5)

$$CLR(R) = Y + \left(2xY - \frac{T'xY}{dT} - Y\right)S =$$

$$Y + SxY - \frac{T'xSxY}{dT}$$

– région G.W.B (2 bits de poids fort de la teinte = 01) associée à la surface G.0.B (figure 5) le coefficient du rouge ne dépend pas de T, il est seulement fonction de Y et S $CLR(R) = Y-SY$ avec, au point 0 $\quad CLR(R) = Y$ et sur la droite G.B $CLR(R) = 0$

– région B.W.R (2 bits de poids fort de la teinte = 10)

  a) zone B.W.MG associé à la surface B.0.f (figure 5) dans cette zone la valeur T' de la teinte tronquée aux 8 bits de poids faible est telle que $0 \leqslant T' < 128$

$$CLR(R) = Y - SxY + \frac{T'xSxY}{dT}$$

    où dT a la valeur indiquée plus avant

  b) zone MG.W.R associée à la surface f.0.y (figure 5) dans cette zone $128 \leqslant T' < 256$ et $CLR(R) = Y$.

Les coefficients du vert et du bleu sont obtenus par rotation de 120° et 240° autour de l'axe O.W de la surface y.h.G.B.f, en laissant le triangle R.G.B (figure 5) fixe. C'est-à-dire que les coefficients du vert et du bleu correspondent respectivement au coefficient du rouge de la région précédente et de la région suivante (région a ici le sens qui lui a été donné dans le calcul du paragraphe précédent).

En désignant par $T_3$ les trois bits de poids fort de la teinte T qui permettent (figure 4) de définir celle des six zones, telle que G.W.CY, dans laquelle est effectué le réglage, les coefficients de couleur s'écrivent donc:

– pour $T_3 = 000$ (zone R.W.YL, figure 4) $CLR(R) = Y$

$$CLR(G) = Y - SxY + \frac{T'xSxY}{dT}$$

$$CLR(B) = Y - SxY$$

– pour $T_3 = 001$

$$CLR(R) = Y + SxY - \frac{T'xSxY}{dT}$$

$$CLR(G) = Y.$$

$$CLR(B) = Y - SxY$$

– pour $T_3 = 010$ $CLR(R) = Y - SxY$ $CLR(G) = Y$

$$CLR(B) = Y - SxY + \frac{T'xSxY}{dT}$$

– pour $T_3 = 011$ $CLR(R) = Y - SxY$

$$CLR(G) = Y + SxY - \frac{T'xSxY}{dT}$$

$$CLR(B) = Y$$

– pour $T_3 = 100$

$$CLR(R) = Y - SxY + \frac{T'xSxY}{dT}$$

$$CLR(G) = Y - SxY$$

$$CLR(B) = Y$$

– pour $T_3 = 101$

$$CLR(R) = Y$$

$$CLR(G) = Y - SxY$$

$$CLR(B) = y + SxY - \frac{T'xSxY}{dt}$$

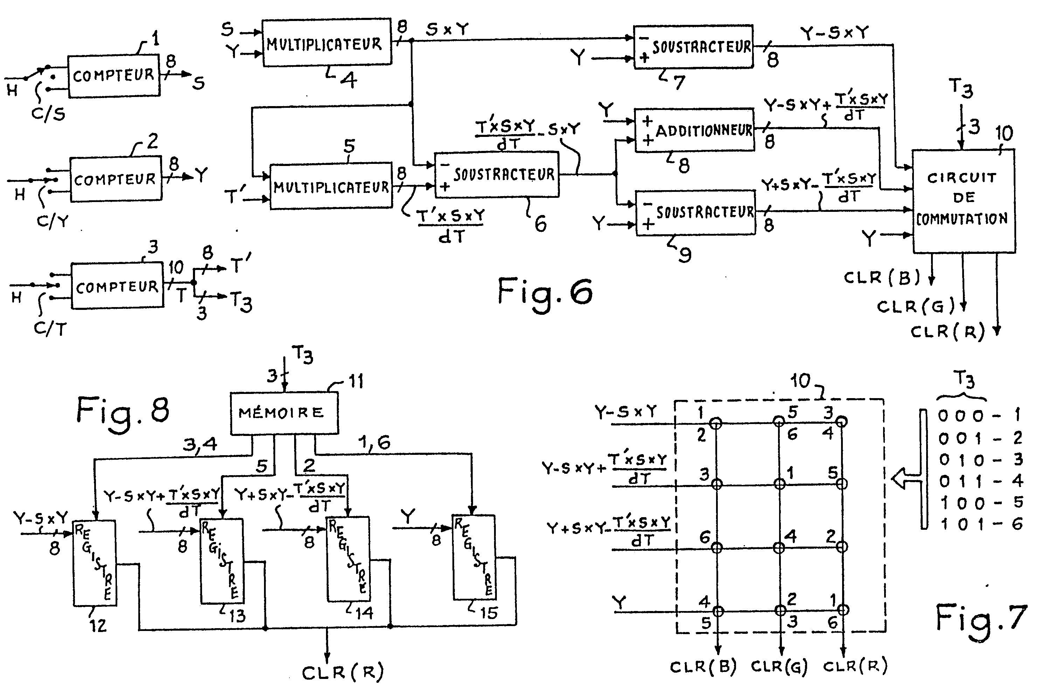

La figure 6 montre un exemple de réalisation d'un dispositif de réglage d'un fond coloré dans une image de télévision. Le dispositif est décrit depuis la commande manuelle des variables S (saturation), Y (luminance) et T (teinte) jusqu'à l'obtention des coefficients CLR(R), CLR(G) et CLR(B).

Les commandes de saturation, de luminance et de teinte sont, dans l'exemple décrit, des impulsions d'horloge, H, envoyées sur trois compteurs 1, 2 et 3 respectivement à travers trois commutateurs C/S, C/Y, CT. Les commutateurs sont des commutateurs à trois positions dont la borne commune reçoit le signal d'horloge, dont la borne milieu n'est pas connectée et dont les deux autres bornes sont respectivement reliées aux accès de comptage et de décomptage des compteurs en anneau.

Les compteurs 1 et 2 comptent de 0 à 255 et fournissent, sur leurs huit sorties, respectivement les signaux S et Y représentatifs de leur état.

Le compteur 3 compte de 0 à 639 et fournit, sur ses dix sorties, le signal T, représentatif de son état; les huit bits de poids fort $T_3$ et les huit bits de poids faible T' du signal de teinte sont indiqués à la sortie du compteur 3.

Un circuit de multiplication, 4, reçoit les signaux S et Y et délivre un signal binaire SxY égal au produit de S par Y amputé des huit bits de poids faible. Un autre circuit de multiplication, 5, fait le produit de SxY par T' et donne un signal binaire $\frac{T'xSxY}{dT}$ égal au produit de SxY par T', amputé des huit bits de poids faible.

En fonction des signaux binaires ainsi obtenus un premier circuit soustracteur, 6, effectue la soustraction $\frac{T'xSxY}{dT}$ – SxY, un second circuit soustracteur, 7, effectue la soustraction Y–SxY, un circuit additionneur, 8, effectue l'addition

$$Y + (\frac{T'xSxY}{dT} - SxY) = Y - SxY + \frac{T'xSxY}{dT}$$ et un troisième circuit soustracteur effectue la soustraction

$$Y - (\frac{T'xSxY}{dT} - SxY) = Y + SxY - \frac{T'xSxY}{dT}.$$

Les signaux de sortie des circuits 7, 8 et 9 ainsi que le signal de luminance, Y, sont envoyés sur un circuit de commutation 10 qui fournit les trois couleurs primaires R, G, B.

La figure 7 est une représentation schématique de la grille de commutation que constitue le circuit de commutation 10. A côté de la grille de commutation a été indiqué un tableau faisant correspondre aux six valeurs que peut prendre $T_3$ (trois bits de poids fort de la teinte) un chiffre décimal qui va donc de 1 à 6; ce chiffre décimal est reporté sur la grille aux intersections où le contact doit être établi compte tenu de la valeur de $T_3$, pour relier respectivement trois des quatre entrées du circuit de commutation 10 à ses trois sorties; cette grille a été établie à partir des trois coefficients de couleur dont les valeurs en fonction de $T_3$ ont été données plus avant.

La figure 8 est un exemple de réalisation de la partie du circuit de commutation 10 des figures 6 et 7, qui sert à obtenir le coefficient du rouge CLR(R). Le signal $T_3$ est appliqué à l'entrée d'une mémoire 11 (PROM, 82HS147 de SIGNETICS) programmée pour fournir un signal de niveau logique «1» sur toutes ses sorties sauf

– sur sa première sortie (signal «0») pour $T_3 =$ 010 ou $T_3 =$ 011 (repères 3,4 sur le conducteur de sortie),

– sur sa deuxième sortie pour $T_3 =$ 100 (repère 5 sur le conducteur),

– sur sa troisième sortie pour $T_3 =$ 000 (repère 2 sur le conducteur),

– sur sa quatrième sortie pour $T_3 =$ 000 ou $T_3 =$ 101 (repères 1,6 sur le conducteur).

Les quatre sorties de la mémoire 11 sont respectivement reliées aux entrées de validation de quatre registres comportant chacun huit bascules de type «D» (dans l'exemple: registre 374 de TEXAS). Ces registres reçoivent respectivement, sur leurs huit entrées de signaux, les signaux

$$Y - SxY, Y - SxY + \frac{T'xSxY}{dT}, Y + SxY - \frac{T'xSxY}{dT} \text{ et } Y \text{ et}$$

leurs sorties sont réunies pour fournir le coefficient du rouge sous forme binaire.

Il est à noter que, dans le dispositif de réglage du fond coloré selon la figure 6, le signal de luminance Y est défini par la valeur du signal de sortie du compteur 2: c'est la valeur affichée sur le compteur 2 grâce au commutateur C/Y. La valeur effective de la luminance, étant donné les coefficients CLR(R), CLR(G), CLR(B), est:
Luminance effective = 0,30 CLR(R) + 0,59 CLR(G) + 0,11 CLR(B).

Il est par ailleurs à remarquer que, dans les figures 6 et 8, les éléments de synchronisation précise, relevant de la technique courante, n'ont pas été représentés en vue de rendre les dessins plus clairs et de simplifier l'exposé.

La présente invention n'est pas limitée à l'exemple décrit, c'est ainsi que dans l'exemple décrit le nombre de bits de T' pourrait, à la limite, être réduit à 1. L'invention s'applique également à une réalisation en circuits analogiques, les compteurs 1, 2 et 3 pouvant être remplacés par des sources de tension, réglables au moyen de potentiomètres, les boutons de commande du potentiomètre remplaçant les commutateurs tels que C/S. Dans ce cas, pour simplifier la réalisation, il est intéressant de régler le signal de teinte, T, au moyen d'un potentiomètre associé à un compteur à six positions (1, 2, 3, 4, 5, 6) qui, modulo 6, compte ou décompte les moitiés de tours du curseur du potentiomètre, selon que le bouton de réglage du potentiomètre est tourné dans un sens ou dans l'autre; le signal $T_3$ est alors donné par le compteur et le signal $T'$ par la source de tension commandée par le potentiomètre en question, quant à la constante dT elle est égale à la moitié de l'excursion totale de la tension à la sortie de la source de tension quand le potentiomètre de réglage fait un tour complet.

**Revendications**

1. Procédé de réglage d'un fond coloré, caractérisé en ce qu'il consiste à afficher, comme variables de réglage, la luminance, Y, la saturation, S, et la teinte, T, et à déterminer les coefficients des couleurs primaires en fonction de ces trois variables, en ce qu'il consiste à définir, à partir de l'excursion maximale, 6xdT, de la teinte, six intervalles égaux, de largeur dT, et trois régions égales, d'origines respectives T = 0, T = 2xdT et T = 4xdT, à définir la valeur de teinte affichée par l'intervalle dans lequel se trouve cette valeur affichée (valeur $T_3$) et par la différence, $T'$, entre la valeur affichée et la valeur de l'origine de celle des régions dans laquelle elle se trouve située et à prendre comme coefficients respectifs des trois couleurs primaires rouge, vert, bleu
– dans le premier intervalle:

$$Y, \ Y - SxY + \frac{T'xSxY}{dT} = k1, \ Y - SxY = k2$$

– dans le deuxième intervalle:

$$Y + SxY - \frac{T'xSxY}{dT} = k3, \ Y, \ k2$$

– dans le troisième intervalle: k2, Y, k1
– dans le quatrième intervalle: k2, k3, Y
– dans le cinquième intervalle: k1, k2, Y
– dans le sixième intervalle: Y, k2, k3.

2. Dispositif de réglage d'un fond coloré pour la mise en œuvre du procédé de réglage selon la revendication 1, caractérisé en ce qu'il comporte:
– des moyens d'affichage de la saturation (C/S, 1), de la luminance (C/Y, 2) et de la teinte (C/T, 3), pour fournir un signal, S, représentatif de la saturation, un signal, Y, représentatif de la luminance et un double signal, T, représentatif de la teinte et composé de deux signaux: un signal $T_3$ représentatif des poids forts de la valeur de la teinte et auquel, selon la valeur qu'il présente, est associée une valeur parmi six, et un signal $T'$, représentatif des poids faibles de la valeur de T et variant de la valeur 0 à la valeur 2xdT (dT valeur constante prédéterminée),
– des moyens de calcul (4–5) couplés aux moyens d'affichage, pour fournir des signaux k1 =

$$Y - SxY + \frac{T'xSxY}{dT}, \ k2 = Y - SxY \ \text{et} \ k3 =$$

$$Y + SxY - \frac{T'xSxY}{dT},$$

– et des moyens de commutation (10), couplés aux moyens d'affichage pour recevoir les signaux Y et $T_3$ et aux moyens de calcul pour recevoir les signaux k1, k2, k3; ces moyens de commutation étant destinés à fournir comme signaux représentatifs des coefficients respectifs des trois couleurs primaires, rouge, vert, bleu, du fond coloré
– pour la première des six valeurs associées à $T_3$: Y, k1, k2
– pour la deuxième des six valeurs associées à $T_3$: k3, Y, k2
– pour la troisième des six valeurs associées à $T_3$: k2, Y, K1
– pour la quatrième des six valeurs associées à $T_3$: k2, k3, Y
– pour la cinquième des six valeurs associées à $T_3$: k1, k2, Y
– pour la sixième des six valeurs associées à $T_3$: Y, k2, k3.

3. Dispositif selon la revendication 2, réalisé sous forme numérique, caractérisé en ce que les moyens d'affichage de teinte fournissent un signal de teinte d'au moins quatre bits, dont les trois bits de poids les plus forts forment le signal $T_3$ et dont les bits, autres que les trois bits de poids les plus forts, forment le signal $T'$.

**Claims**

1. A method for adjusting a coloured background, characterized in that the luminance Y, the saturation S and the tint T are displayed as adjusting variables, that the coefficients of the primary colours are defined in accordance with these three variables, and that six equal intervals having the width dT and three equal regions having respectively the origins T = 0, T = 2xdT and T = 4xdT are defined from the maximum tint excursion 6xdT, that the value of the displayed tint is defined by the interval within which the displayed value (value $T_3$) is situated and by the difference T' existing between the displayed value and the value of the origin of the one region which it is situated, and that for the three primary colours red, green and blue the following variables are taken as the respective coefficients:
– in the first interval:
  Y, Y − SxY + (T'xSxY)/dT = k1, Y − SxY = k2
– in the second interval:
  Y + SxY − (T'xSxY)/dT = k3, Y, k2
– in the third interval: k2, Y, k1
– in the fourth interval: k2, k3, Y
– in the fifth interval: k1, k2, Y
– in the sixth interval: Y, k2, k3.

2. A device for adjusting a coloured background used to implement the adjusting method according to claim 1, characterized in that it comprises:
– means for displaying the saturation (C/S, 1), the luminance (C/Y, 2) and the tint (C/T, 3) and for delivering a signal S representing the saturation, a signal Y representing the luminance, and a double signal T representing the tint and being composed of two signals: a signal $T_3$ representing the higher weights of the tint value and to which is associated, in accordance with the value which it represents, one of the six values, and a signal T′ representing the lower weights of the value of T and varying from value 0 through value 2xdT (dT being a predetermined constant value),

– computing means (4–5) connected to the display means for delivering the following signals: k1 = Y−SxY+(T′xSxY)/dT, k2 = Y−SxY and k3 = Y+SxY−(T′xSxY)/dT, and

– switching means (10) connected to the display means for receiving the signals Y and $T_3$ and to the computing means for receiving the signals k1, k2, k3, these computing means being intended to deliver the following parameters as signals representative of the respective coefficients of the three primary colours red, green and blue of the coloured background:

– for the first one of the six values associated with $T_3$: Y, k1, k2

– for the second one of the six values associated with $T_3$: k3, Y, k2

– for the third one of the six values associated with $T_3$: k2, Y, k1

– for the fourth one of the six values associated with $T_3$: k2, k3, Y

– for the fifth one of the six values associated with $T_3$: k1, k2, Y

– for the sixth one of the six values associated with $T_3$: Y, k2, k3.

3. A device according to claim 2, implemented in digital form, characterized in that the tint display means deliver a tint signal consisting of at least four bits, of which the three higher order bits constitute the signal $T_3$ and the remaining bits constitute the signal T′.

**Patentansprüche**

1. Verfahren zur Einstellung eines farbigen Hintergrunds, dadurch gekennzeichnet, daß als Einstellungsvariable die Leuchtdichte Y, die Sättigung S und die Tönung T angezeigt und die Koeffizienten der Primärfarben als Funktion dieser drei Variablen bestimmt werden, daß aus der maximalen Abweichung der Tönung 6xdT sechs gleiche Intervalle mit der Breite dT und drei gleiche Bezirke mit Ursprung T=0 bzw. T=2xdT bzw. T=4xdT definiert werden, daß der angezeigte Tönungswert durch das Intervall, in welchem sich dieser angezeigte Wert (Wert $T_3$) befindet, sowie durch den Unterschied T′ zwischen dem angezeigten Wert und dem Ursprungswert jenes Bezirks definiert wird, in welchem er sich befindet, und daß als jeweilige Koeffizienten der drei Primärfarben rot, grün und blau gewählt werden:
– im ersten Intervall:
 Y, Y−SxY+(T′xSxY)/dT = k1, Y−SxY = k2
– im zweiten Intervall:
 Y+SxY−(T′xSxY)/dT = k3, Y, k2
– im dritten Intervall: k2, Y, k1
– im vierten Intervall: k2, k3, Y
– im fünften Intervall: k1, k2, Y
– im sechsten Intervall: Y, k2, k3.

2. Vorrichtung zum Einstellen eines farbigen Hintergrunds zur Durchführung des Einstellverfahren nach Anspruch 1, dadurch gekennzeichnet, daß es folgende Mittel aufweist:

– Mittel zur Anzeige der Sättigung (C/S, 1), der Leuchtdichte (C/Y, 2) und der Tönung (C/T, 3) und zur Lieferung eines Signals S für die Sättigung, eines Signals Y für die Leuchtdichte und eines doppelten Signals T, das für die Tönung repräsentativ ist und aus zwei Signalen besteht, nämlich einem Signal $T_3$, das für die höheren Gewichtungen des Tönungswertes repräsentativ ist und dem je nach dem von ihm vertretenen Wert ein Wert von sechs Werten zugeordnet ist, und einem Signal T′, das für die niedrigen Gewichtungen des Werts T repräsentativ ist und zwischen dem Wert 0 und dem Wert 2xdT variiert (dT ist der vorherbestimmte konstante Wert),

– Rechenmittel (4–5), die mit den Anzeigemitteln gekoppelt sind und die folgenden Signale liefern:

k1 = Y−SxY+(T′xSxY)/dT, k2 = Y−SxY und k3 = Y+SxY−(T′xSxY)/dT,

– und Schaltmittel (10), die mit den Anzeigemitteln zum Empfang der Signale Y und $T_3$ und mit den Rechenmittel zum Empfang der Signale k1, k2, k3 gekoppelt sind, wobei die Schaltmittel als repräsentative Signale für die jeweiligen Koeffizienten der drei Primärfarben rot, grün, blau des farbigen Hintergrunds die folgenden Signale liefern:

– für den ersten der sechs dem Signal $T_3$ zugeordneten Werte: Y, k1, k2

– für den zweiten der sechs dem Signal $T_3$ zugeordneten Werte: k3, Y, k2

– für den dritten der sechs dem Signal $T_3$ zugeordneten Werte: k2, Y, k1

– für den vierten der sechs dem Signal $T_3$ zugeordneten Werte: k2, k3, Y

– für den fünften der sechs dem Signal $T_3$ zugeordneten Werte: k1, k2, Y

– für den sechsten der sechs dem Signal $T_3$ zugeordneten Werte: Y, k2, k3.

3. Vorrichtung nach Anspruch 2, die digital ausgeführt ist, dadurch gekennzeichnet, daß die Tönungsanzeigemittel ein Tönungssignal von mindestens vier Bits liefern, von denen die drei Bits der höheren Gewichtung das Signal $T_3$ und die restlichen Bits das Signal T′ bilden.

Fig.1

Fig.2

Fig.3

Fig.4

Fig.5

**Fig.6**

**Fig.7**

**Fig.8**